**Europäisches Patentamt**

**European Patent Office**

**Office européen des brevets**

(19)

(11) Veröffentlichungsnummer: **0 235 649**
**B1**

(12) **EUROPÄISCHE PATENTSCHRIFT**

(45) Veröffentlichungstag der Patentschrift:
19.12.90

(51) Int. Cl.⁵: **H04L 12/40**, H04L 25/02

(21) Anmeldenummer: **87102079.8**

(22) Anmeldetag: **13.02.87**

(54) Schaltungsanordnung zur seriellen Datenübertragung zwischen mehreren Teilnehmerstellen.

(30) Priorität: **17.02.86 DE 3604952**

(43) Veröffentlichungstag der Anmeldung:
**09.09.87 Patentblatt 87/37**

(45) Bekanntmachung des Hinweises auf die Patenterteilung:
**19.12.90 Patentblatt 90/51**

(84) Benannte Vertragsstaaten:
**AT BE CH DE ES FR GB GR IT LI NL SE**

(56) Entgegenhaltungen:
FR-A- 2 363 240

ELECTRONICS, Band 47, Heft 11, Mai 1974,
Seiten 119-120; T. BRUINS: "Data transmission is faster
with ternary coding"
PATENT ABSTRACTS OF JAPAN, Band 8,
Nr. 155 (E-256)[1592], 19. Juli 1984; & JP-A-59 58 939
ELEKTRONIK, Heft 10, 17. Mai 1985, Seite 131, München,
DE
ELECTRONIC ENGINEERING, Band 53, Heft 658,
Oktober 1981, Seiten 81-85, London, GB; R. BURGESS:
"RS422 and beyond"
ELECTRICAL DESIGN NEWS, Band 17, Heft 6,
März 1972, Seiten 44-46; D. PIPPINGER: "Line drivers
are not limited to computer systems"

(73) Patentinhaber: **Siemens Aktiengesellschaft,
Wittelsbacherplatz 2, D-8000 München 2(DE)**

(72) Erfinder: **Lang, Otto, Ing. grad., Reschreiterstrasse 17,
D-8000 München 45(DE)**
Erfinder: **Dombrowski, Manfred, Ing.grad.,
Geroltstrasse 36, D-8000 München 2(DE)**

## Beschreibung

Die Erfindung bezieht sich auf eine wie im Oberbegriff des Patentanspruches 1 angegebene Schaltungsanordnung zur seriellen Datenübertragung zwischen mehreren Teilnehmerstellen.

Eine derartige Schaltungsanordnung ist bereits durch die Zeitschrift Elektronik 6/23.3.1984, Seite 24 bzw. 12/16.6.1984, Seiten 97 und 98 bekannt.

Die bekannte Schaltungsanordnung enthält Schnittstellenbausteine zur seriellen Datenübertragung, die jeweils aus einem Datensender und einem Datenempfänger bestehen und für Vollduplex- oder Halbduplex-Betrieb geeignet sind. Bei Halbduplex-Betrieb ist in jeder Teilnehmerstelle der Ausgang des Datensenders unmittelbar mit dem Eingang des Datenempfängers verbunden. Die Teilnehmerstellen, die z.B. ein Rechner und daran angeschlossene Peripheriegeräte sein können, sind an einen Datenbus angeschlossen. In jeder Teilnehmerstelle lassen sich der Datensender und der Datenempfänger durch Steuersignale in einen aktiven oder in einen passiven Zustand steuern.

Da die Sender im aktiven Zustand an ihrem Ausgang eine niederohmige Spannungsquelle darstellen, deren Spannung vom Logikpegel des an den Eingang angelegten Datensignals abhängt, kann zu jedem Zeitpunkt immer nur ein Datensender aktiv sein.

Man kann zu diesem Zweck das Steuersignal, das den Datensender einer Teilnehmerstelle aktiv steuert, zu allen anderen Teilnehmern übertragen und dort dazu verwenden, eine Aktivsteuerung für die Zeit der Belegung des Datenbusses unmöglich zu machen. Dabei liegt es nahe, die Steuersignale über Steuerleitungen oder über einen Steuerbus zu übertragen, der zusätzlich zum Datenbus vorgesehen ist.

Aufgabe der Erfindung ist es, eine wie im Oberbegriff des Patentanspruches 1 angegebene Schaltungsanordnung so auszubilden, daß eine gegenseitige Steuerung der Teilnehmerstellen ohne Zuhilfenahme zusätzlicher Steuerleitungen über den Datenbus selbst erfolgt und dies in einer solchen Weise, daß die Teilnehmerstellen von sich aus auf den Bus zugreifen können, wenn dieser nicht durch eine andere Teilnehmerstelle belegt ist.

Schaltungsanordnungen dieser Art sind auch Gegenstand der gleichzeitig eingereichten EP-A 0 234 453 und EP-A 0 235 648.

Bei einer wie im Oberbegriff des Patentanspruches 1 angegebenen Schaltungsanordnung sind bei nicht belegtem Datenbus alle Datensender an ihrem Ausgang hochohmig.

Eine Erkenntnis im Rahmen der Erfindung besteht darin, daß sich dieser hochohmige Tristate-Zustand dadurch für Steuerungszwecke ausnutzen läßt, daß man die Pegelverhältnisse auf dem Datenbus in der Art auswertet, derart, daß ein Freikriterium bei nicht belegter Leitung gebildet und bei belegter Leitung ein Steuerkriterium gewonnen wird, das unabhängig vom logischen Zustand des Datensignals ist.

Überlegungen im Rahmen der Erfindung haben ferner ergeben, daß Schnittstellenbausteine, die eine sogenannte Fail-Safe-Schaltung aufweisen, in besonderer Weise geeignet sind, zur Lösung der dem Anmeldungsgegenstand zugrunde liegenden Aufgabe beizutragen. Schnittstellenbausteine der genannten Art müssen nämlich bei einer eingangsseitigen Unterbrechung und damit bei hochohmiger Quelle einen definierten Ausgangspegel abgeben, um die gewünschte Sicherheit zu bieten.

Beispielsweise ist aus der DE-Z Elektronik 10/17.5.1985, Seite 131 eine IC-Reihe für RS-485-/RS-422-Anwendungen bekannt, die für Fail-Safe-Zwecke bestimmt sind. Die Empfängerbausteine weisen eine hohe Eingangsimpedanz auf. Eine Fail-Safe-Schaltung legt den Ausgang auf "High"-Pegel, wenn der Eingang offen ist.

Die bekannten Bausteine sind für Anwendungen bestimmt, bei denen eine eingangsseitige Leitungsunterbrechung zu einem vorgegebenen Empfänger-Ausgangssignal führt, so daß gefährliche Fehlsteuerungen sicher vermieden werden können.

Gemäß der Erfindung wird die Schaltungsanordnung zur Lösung der genannten Aufgabe in der im kennzeichnenden Teil des Patentanspruches 1 angegebenen Weise ausgebildet. Dabei können die Datensender unmittelbar oder mittelbar, insbesondere mittels Übertragungseinrichtungen, die mit Modems versehen sind, mit den Teilnehmerstellen verbunden sein. Die Zusammenschaltung der beiden Datenempfänger der Erkennungsschaltung kann außerhalb oder innerhalb eines integrierten Schaltkreises realisiert sein.

Datensender für Tristate-Anwendungen in üblichen Schnittstellenbausteinen haben im aktiven Zustand jeweils zwischen ihren Ausgangsanschlüssen und Masse einen vergleichsweise kleinen und im passiven Zustand einen wesentlich größeren Innenwiderstand. Der Datenbus hat daher als Quelle für einen Datenempfänger Quellenwiderstände, die durch den Zustand der an ihn angeschlossenen Datensender bestimmt ist. Die Quellenwiderstände entsprechen im Freizustand jeweils dem Widerstand der parallel geschalteten hochohmigen Datensender. Im Belegtzustand sind die niederohmigen Ausgangswiderstände des Datensenders wirksam, der den Datenbus belegt hat. Dies gilt in gleicher Weise auch für den Fall, daß der Datenbus an wenigstens einer Stelle über einen Widerstand, insbesondere in der Größe des Wellenwiderstandes der Datenleitung, abgeschlossen ist.

Durch die genannten Maßnahmen ergibt sich der Vorteil, daß die Teilnehmerstellen mit einfach realisierbaren Mitteln Aufschluß über den Belegungszustand des Datenbusses gewinnen können, ohne daß hierzu ein eigener Steuerbus erforderlich ist. Ein weiterer Vorteil besteht darin, daß die Erkennungsschaltung aus handelsüblichen elektronischen Schaltkreisen zusammengesetzt ist, die die RS485-Spezifikation einhalten. Besonders vorteilhaft läßt sich das Belegtsignal zur Steuerung eines oder mehrerer Modems verwenden, in der Weise, daß der Sender des Modems bzw. die Sender der Modems in Abhängigkeit vom Belegtzustand des Datenbusses in den aktiven oder passiven Zustand gesteuert werden. Belegt ein Modem den Datenbus, so werden die Datensender aller anderen Modems selbsttätig aktiv gesteuert, ohne daß hierzu Umschalteeinrichtungen mit aufwendigen Steuereinrichtungen erforderlich sind.

Durch die genannten Maßnahmen ergibt sich der Vorteil, daß auch unter an sich ungünstigen Voraussetzungen von der vorteilhaften Lösung nach Patentanspruch 1 Gebrauch gemacht werden kann.

Ein besonders geringer Aufwand ergibt sich dadurch, daß einer der beiden Datenempfänger der Erkennungsschaltung zugleich als Datenempfänger der betreffenden Teilnehmerstelle dient.

Eine Teilnehmerstelle darf nicht auf den Datenbus zugreifen, wenn dieser bereits durch einen anderen Teilnehmer belegt ist. Hat eine Teilnehmerstelle den Datenbus belegt, so stellt dies die Erkennungsschaltung fest. In diesem Fall steht der Datenbus jedoch dieser Teilnehmerstelle nach wie vor zur Verfügung.

Enthält die Teilnehmerstelle selbst keine Vorrichtung, die im betrachteten Betriebszustand eine Selbstabschaltung der Teilnehmerstelle verhindert, so ist es zweckmäßig, ein Belegtkriterium nur dann an die Teilnehmerstelle weiter zu geben, wenn der Datenbus durch eine andere Teilnehmerstelle belegt ist.

Da in den Teilnehmerstellen die Datensender und die Datenempfänger mit Hilfe von Steuersignalen aktiviert werden, stehen mit diesen Steuersignalen Kriterien darüber zur Verfügung, ob eine festgestellte Belegung des Busses gegebenenfalls von der betreffenden Teilnehmerstelle selbst herrührt. So läßt sich durch eine gemeinsame Auswertung oder Verknüpfung des Steuersignals und des Belegtkriteriums feststellen, ob der Datenbus durch die betreffende oder durch eine andere Teilnehmerstelle belegt ist. Zweckmäßigerweise wird die Schaltungsanordnung dabei in der im Anspruch 3 angegebenen Weise ausgebildet.

Die UND-Schaltung sperrt das Kriterium "Datenbus belegt", wenn die betreffende Teilnehmerstelle selbst den Datenbus belegt hat.

Eine Anordnung, die in vorteilhafter Weise Störungen bzw. durch Umschaltvorgänge entstehende Nadelimpulse eliminiert, ergibt sich in weiterer Ausgestaltung der Erfindung aus den Maßnahmen nach Anspruch 4. Dabei dient der Schmitt-Trigger zugleich als UND-Glied.

Die Maßnahmen nach Anspruch 5 haben den Vorteil, daß der Schmitt-Trigger zugleich Störungen eliminiert und die gewünschte UND-Verknüpfung realisiert.

Eine weitere vorteilhafte Ausgestaltung der Erfindung ergibt sich aus Anspruch 6.

Die Erfindung wird anhand der in den Figuren dargestellten Ausführungsbeispiele näher erläutert.

Es zeigen

Fig. 1 eine Schaltungsanordnung zur seriellen Datenübertragung zwischen mehreren über einen Datenbus miteinander verbundenen Digital- und Übertragungsbaugruppen mit Datenempfänger enthaltenden Erkennungsschaltungen und

Fig. 2 von einer Schaltungsanordnung zur seriellen Datenübertragung eine Digitalbaugruppe, bei der ein Datenempfänger sowohl als Signalempfänger der Teilnehmerstelle dient als auch der Erkennungsschaltung angehört.

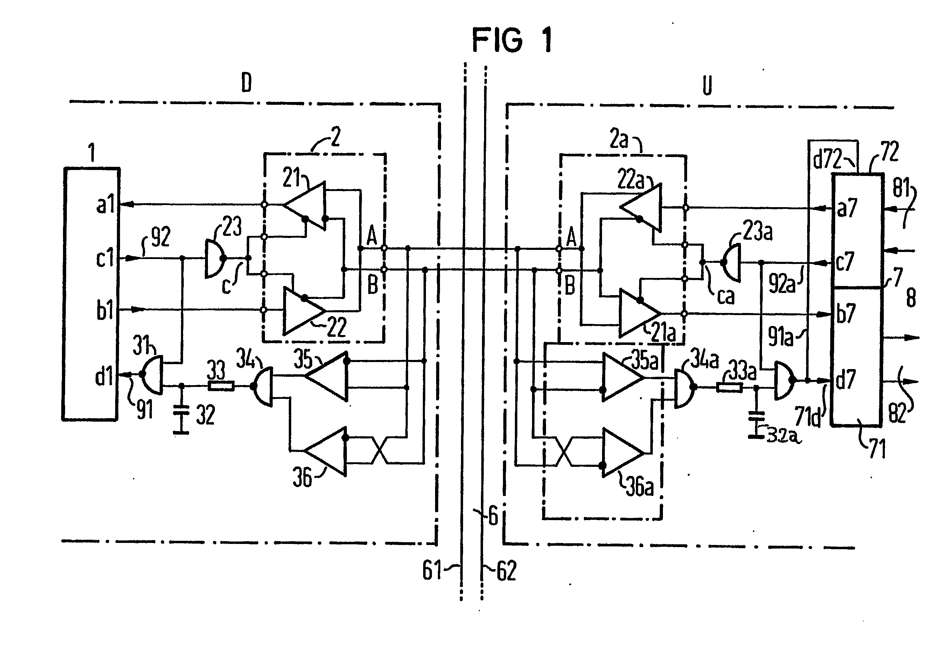

Fig. 1 zeigt eine Schaltungsanordnung zur seriellen Datenübertragung. Der zweiadrige Bus 6 verbindet mehrere Baugruppen eines Fernwirkgerätes oder einer Fernwirkeinrichtung, von denen in der Figur die Digitalbaugruppe D und die Übertragungsbaugruppe U dargestellt sind. Die beiden Adern 61 und 62 des Datenbusses 6 werden außer zur Datenübertragung auch zur Übermittlung von Steuersignalen ausgenutzt, die zur gegenseitigen Steuerung der Baugruppen dienen.

Die Digitalbaugruppe D ist eine Einrichtung zur Ablaufsteuerung und enthält als Teilnehmerstelle 1 einen durch einen Mikroprozessor gesteuerten USART 1, den Schnittstellenbaustein 2 und die Erkennungsschaltung 3.

Die Übertragungsbaugruppe U enthält das an die vierdrähtige NF-Übertragungsleitung 8 angeschlossene Modem 7 mit Sender 71 und Empfänger 72, den Schnittstellenbaustein 2a und die Erkennungsschaltung 3a. Das Modem 7 besteht z.B. aus einem FM-Sender und einem FM-Empfänger. Die NF-Übertragungsleitung 8 führt zu wenigstens einer weiteren Teilnehmerstelle und ist im beschriebenen Beispiel Bestandteil eines Fernwirknetzes mit mehreren Stationen bzw. weiteren Teilnehmerstellen. Die Übertragungsleitung ist eine Vierdrahtleitung, bestehend aus der ankommenden Leitung 81 und der abgehenden Leitung 82. Gegebenenfalls kann anstelle der Vierdrahtleitung eine Zweidrahtleitung Verwendung finden. In diesem Fall sind der Sender 71 und der Empfänger 72 an die Zweidrahtleitung anzuschließen.

An die beiden Adern 61 und 62 des Busses 6 können weitere Digital- und/oder Übertragungsbaugruppen angeschlossen werden. Weitere Digitalbaugruppen können insbesondere Vorrichtungen zur Meldungsein- oder ausgabe sein. Weitere Übertragungsbaugruppen können dazu dienen, die von einer Digitalbaugruppe oder von einer Übertragungsbaugruppe an den Bus 6 abgegebenen seriellen Daten an weitere Übertragungsleitungen und daran angeschlossenen Stationen weiterzugeben.

Als Schnittstelle zwischen den Baugruppen und dem Datenbus 6 dient eine für eine derartige Multipoint-Buskonfiguration geeignete Schnittstelle, bei der die Datensender 22 bzw. 22a im nichtaktiven Zustand an ihrem Ausgang hochohmig sind. Eine solche Schnittstelle ist insbesondere die Schnittstelle RS485.

Der Datenbus 6 kann - abweichend von Fig. 1 - in bekannter Weise an seinen beiden Enden jeweils durch einen Widerstand zwischen den beiden Adern 61, 62 mit seinem Wellenwiderstand abgeschlossen sein. Alle Teilnehmerstellen liegen über eine in den Figuren nicht dargestellte Masseverbindung auf gemeinsamem Massepotential.

Zum Anschluß an den Datenbus 6 sind die Baugruppen, von denen in der Figur eine Digitalbaugruppe D und eine Übertragungsbaugruppe U dargestellt sind, jeweils mit einem Schnittstellenbaustein 2 bzw. 2a versehen, der z.B, vom Typ µA 96176 sein kann.

Bei dem Schnittstellenbaustein 2 der Digitalbaugruppe D sind die Ausgangsanschlüsse A und B des Datensenders 22 unmittelbar mit dem Eingang des Datenempfängers 21 verbunden. Der Anschluß A ist an die Ader 61, der Anschluß B an die Ader 62 des Datenbusses 6 geführt.

Der Datensender 22 und der Datenempfänger 21 sind jeweils mit ihren Steueranschlüssen an die gemeinsame Steuerleitung C geführt und lassen sich durch Steuersignale wechselweise aktiv und passiv steuern, so daß zu ein und demselben Zeitpunkt jeweils nur der Datensender 22 oder der Datenempfänger 21 aktiv sein kann.

Der Schnittstellenbaustein 2a der Übertragungsbaugruppe U ist wie der Schnittstellenbaustein 2 der Digitalbaugruppe D aufgebaut. Der Ausgang des Datensenders 22a ist unmittelbar mit dem Eingang des Datenempfängers 21a verbunden. Der Datensender 22a und der Datenempfänger 21a sind jeweils mit ihren Steueranschlüssen an die gemeinsame Steuerleitung Ca geführt.

Der Schnittstellenbaustein 2 der Digitalbaugruppe D ist an den USART 1 angeschlossen. Der Schnittstellenbaustein 2a der Übertragungsbaugruppe U ist mit dem Modem 7 verbunden.

Die Schnittstellenbausteine 2 und 2a stellen Pegelwandler dar, die auf der dem Datenbus 6 abgewandten Seite mit TTL-Pegel betrieben werden. Im Schnittstellenbaustein 2 ist je nach logischem Zustand des an der Steuerleitung C angelegten TTL-Logikpegel der Datenempfänger 21 aktiviert und der Datensender 22 passiv oder umgekehrt. In entsprechender Weise ist bei dem Schnittstellenbaustein 2a abhängig vom Logikpegel des an der Steuerleitung Ca angelegten Steuersignals der Datenempfänger 21a aktiviert und der Datensender 22a passiv oder umgekehrt.

Es kann andererseits zweckmäßig sein, in der Digitalbaugruppe D nur den Datensender 22 über die Steuerleitung C zu steuern und den Datenempfänger 21 immer eingeschaltet zu lassen. Damit kann das von der Digitalbaugruppe D auf den Bus 6 gesendete Datensignal gleichzeitig zur Kontrolle ausgewertet werden.

In der Digitalbaugruppe D ist der Ausgang des Datenempfängers 21 an den Dateneingang a1 des USART 1 geführt. An den Datenausgang b1 des USART 1 ist der Eingang des Datensenders 22 angeschlossen. Der Steuereingang des Datenempfängers 21 und der Steuereingang des Datensenders 22 sind unmittelbar miteinander und mit der Steuerleitung c verbunden. Der Steuerausgang c1 des USART 1 ist über den Inverter 23 an die Steuerleitung c des Schnittstellenbausteins 2 geführt.

Die Erkennungsschaltung 3 der Digitalbaugruppe D enthält die Datenempfänger 35 und 36, deren Eingänge in Antiparallelschaltung an die Adern 61 und 62 des Datenbusses 6 angeschlossen sind. Die Ausgänge der Datenempfänger 35 und 36 sind an die Eingänge des NAND-Gliedes 34 geführt. Der Ausgang des NAND-Gliedes 34 ist über ein RC-Glied, bestehend aus dem Widerstand 33 und dem Kondensator 32 an den Signaleingang des Schmitt-Triggers 31 geführt. Ein Steuereingang des Schmitt-Triggers 31 ist an den Steuerausgang c1 des USART 1 angeschlossen.

Die beiden Eingänge des Schmitt-Triggers 31 sind nach Art eines UND-Gliedes miteinander verknüpft. Der invertierende Ausgang des Schmitt-Triggers 31 ist über die Steuerleitung 91 an den Steuereingang d1 des USART 1 geführt.

Die Erkennungsschaltung 3a der Übertragungsbaugruppe U enthält die Datenempfänger 35a und 36a, deren Eingänge in Antiparallelschaltung an die Adern 61 und 62 des Datenbusses 6 angeschlossen sind. Die Ausgänge der Datenempfänger 35a und 36a sind an die Eingänge des NAND-Gliedes 34a geführt. Der Ausgang des NAND-Gliedes 34a ist über ein RC-Glied, bestehend aus dem Widerstand 33a und dem Kondensator 32a an den Signaleingang des Schmitt-Triggers 31a geführt. Ein Steuereingang des Schmitt-Triggers 31 a ist an den Steuerausgang c7 des Modems 7 angeschlossen.

Die beiden Eingänge des Schmitt-Triggers 31a sind nach Art eines UND-Gliedes miteinander verknüpft. Der invertierende Ausgang des Schmitt-Triggers 31a ist über die Steuerleitung 91a an die Steuereingänge d71 und d72 des Modems 7 geführt.

Als Datensender 22 und Datenempfänger 21 bzw. Datensender 22a und Datenempfänger 21a kann z.B. ein Schnittstellenbaustein vom Typ µA 96176 Verwendung finden. Die Datenempfänger der Erkennungsschaltung können z.B. vom Typ µA 96173 oder 96175 der Fa. Fairchild sein.

Beim Senden der in Fig. 1 gezeigten Fernwirkstation liegen die Sendedaten am Ausgang b1 des USART 1 an, werden in dem als Treiber dienenden Datensender 22 des Schnittstellenbausteins 2 auf den Schnittstellenpegel umgesetzt, über die Leitungen 61 und 62 des Datenbusses 6 zum Datenempfänger 21a des Schnittstellenbausteins 2a der Übertragungsbaugruppe U geleitet, von diesem auf TTL-Pegel umgesetzt und an den Eingang b7 des im Modem 7 enthaltenen Senders 71 abgegeben.

Im Empfangszustand der Fernwirkstation liegen die Empfangsdaten am Ausgang a7 des im Modem 7 enthaltenen Empfängers 72 an, werden im Datensender 22a des Schnittstellenbausteins auf Schnittstellenpegel umgesetzt, über die Adern 61, 62 des Datenbusses 6 zum Datenempfänger 21 des Schnittstellenbausteins 2 geleitet, von diesem auf TTL-Pegel umgesetzt und an den Dateneingang a1 des USART 1 abgegeben.

Der Tristate-Zustand des RS485-Datenbusses 6, entsprechend einem Logikpegel 0 auf einer Steuerleitung C bzw. Ca, signalisiert den angeschlossenen Baugruppen, daß sie auf den Datenbus zugreifen können. Greift eine Baugruppe auf den Datenbus 6 zu, so nimmt der Datenbus einen Nicht-Tristate-Zustand an. Die Auswertung dieses Zustandes führt in den weiteren Baugruppen zur Bildung eines Steuersignals, welches die Steuerleitung 91 bzw. 91a auf Logikpegel 0 schaltet und damit den Zugriff aller übrigen Baugruppen auf den Bus sperrt. Außerdem steuert dieses Steuersignal die Übertragungsbaugruppe(n) so, daß deren Sender 71 zur Übertragungsleitung 8 hin aktiv werden und daß deren Empfänger 72 gesperrt werden.

Der USART kann z.B. vom Typ SAB 8251 A sein.

Die Steuerung der Schnittstellenbausteine über den Bus 6 umfaßt die folgenden Betriebszustände:

a) Ist der Datenbus 6 nicht belegt, so befinden sich alle Datensender 22, 22a im hochohmigen Tristate-Zustand.

In diesem Zustand geben die Datenempfänger 35 und 36 bzw. 35a und 36a, die eine sogenannte Fail-Safe-Schaltung aufweisen, jeweils an ihrem Ausgang High-Pegel bzw. die logische Eins an die beiden Eingänge der CMOS-NAND-Glieder 34 bzw. 34a ab. Die Ausgänge der NAND-Glieder 34 und 34a haben daher Logikpegel 0. Damit ist der Ausgang des Schmitt-Triggers 31 bzw. 31a - unabhängig von dem Logikpegel des an seinen Steuereingang geführten Steuersignals - auf Logikpegel 1 geschaltet.

In der Digitalbaugruppe D und gegebenenfalls in weiteren Digitalbaugruppen signalisiert die logische 1 auf der Steuerleitung 91 dem USART 1, daß der Datenbus 6 nicht belegt ist. In diesem Fall ist auch die NF-Übertragungsleitung 8 des Fernwirknetzes nicht belegt. In der Übertragungsbaugruppe U und gegebenenfalls in weiteren Übertragungsbaugruppen steuert die logische 1 auf der Steuerleitung 91a den Empfänger 72 auf Empfang und sperrt den Sender 71.

b) Ist der Datenbus 6 durch die Digitalbaugruppe D belegt, so schaltet in der belegenden Digitalbaugruppe der Steuerausgang cl des USART 1 die daran angeschlossene Steuerleitung 92 auf die logische 0. Der Inverter 23 aktiviert den Datensender 22. Der Ausgang des Datensenders 22 ist daher niederohmig. Je nach logischem Zustand am Datenausgang bl des USART 1 wird über den Datenbus 6 eine logische 1 oder eine logische 0 übertragen.

Die beiden vorgegebenen Spannungen, die die Ausgangsanschlüsse A, B der Datensender 22, 22a gegen Bezugspotential annehmen können, haben die gleiche Polarität.

Im Falle der Schnittstelle RS485 liegt bei Logikpegel 1 am Ausgangsanschluß A des Schnittstellenbausteins 2 z.B. die Spannung 3,7 V und am Ausgangsanschluß B z.B. die Spannung 1,1 V gegen Masse. Bei Logikpegel 0 liegt am Ausgangsanschluß A z.B. die Spannung 1,1 V und am Ausgangsanschluß B z.B. die Spannung 3,7 V. Somit liegt bei aktiviertem Schnittstellenbaustein und dadurch belegtem Bus 6 grundsätzlich eine der beiden Adern 61 oder 62 auf dem niedrigen Potential z.B. 1,1 V und die andere Ader auf hohem Potential von z.B. 3,7 V. Der Belegtzustand bewirkt, daß immer einer der beiden Datenempfänger 35 und 36 an seinem Ausgang eine logische 1 und der andere eine logische 0 abgibt. Dies führt wiederum dazu, daß in allen Baugruppen die Ausgänge der NAND-Glieder 34 bzw. 34a den Logikpegel 1 annehmen.

In der aktiven Digitalbaugruppe D wird dieses Signal nicht weitergegeben, da der Schmitt-Trigger 31 durch eine logische 0 vom Steuerausgang c1 des USART 1 gesperrt ist.

Im betrachteten Betriebszustand sind gegebenenfalls vorgesehene weitere, in der Figur nicht dargestellte Digitalbaugruppen dagegen nicht aktiv, so daß die Schmitt-Trigger durch eine logische 1 geöffnet werden. Somit steuert dort die logische 1 am Ausgang des NAND-Gliedes 34 über den nachgeschalteten Schmitt-Trigger 31 die Steuerleitung 91 auf die logische 0, meldet dem USART, daß der Datenbus 6 von einer anderen Baugruppe belegt ist und sperrt damit den Zugriff auf den Datenbus 6.

In der Übertragungsbaugruppe U und gegebenenfalls in weiteren Übertragungsbaugruppen steuert die logische 1 am Ausgang des NAND-Gliedes 34a über den nachgeschalteten Schmitt-Trigger 31a die Steuerleitung 91a auf Logikpegel 0, sperrt damit den Empfänger 72 und schaltet den Sender 71 ein.

c) Ist der Datenbus 6 durch die Übertragungsbaugruppe U belegt, so empfängt der Empfänger 72 über die NF-Leitung 8 ein Telegramm aus dem Fernwirknetz. Die Steuerleitung 92a schaltet auf die logische 0, sperrt damit den Schmitt-Trigger 31a und aktiviert über den Inverter 23a den Datensender 22a, so daß dieser auf den Datenbus 6 arbeitet. Entsprechendes gilt für eine weitere Übertragungsbaugruppe, falls diese anstelle der Übertragungsbaugruppe U den Datenbus 6 belegt.

In der am Datenbus 6 angeschlossenen Digitalbaugruppe D erkennt das NAND-Glied 34 den Belegungszustand und sperrt durch eine logische 0, die über die Steuerleitung 91 zum Steuersignaleingang d1 des USART 1 gelangt, für den USART 1 den Zugriff auf den Bus 6. Dasselbe gilt gegebenenfalls für weitere am Bus 6 angeschlossene Digitalbaugruppen.

Sind weitere Übertragungsbaugruppen U am Bus 6 angeschlossen, so erkennt deren NAND-Glied 34a den Belegungszustand und schaltet über den nachgeschalteten Schmitt-Trigger 31a den Empfänger 72 aus und den Datensender 71 ein.

Mit Hilfe der Schaltungsanordnung lassen sich auf besonders einfache Weise Verzweigungsfunktionen in Übertragungsnetzen realisieren, ohne daß zwischen den Übertragungsbaugruppen zusätzliche logische Verknüpfungen oder Steuersignalleitungen erforderlich sind.

In Abwandlung der gezeigten Schaltungsanordnung kann es ferner zweckmäßig sein, den Datenempfänger 21 bzw. 21a nicht je nach Belegtzustand des Datenbusses aktiv oder passiv zu steuern sondern ständig empfangsbereit zu halten, indem sein Steuereingang fest an Massepotential gelegt wird.

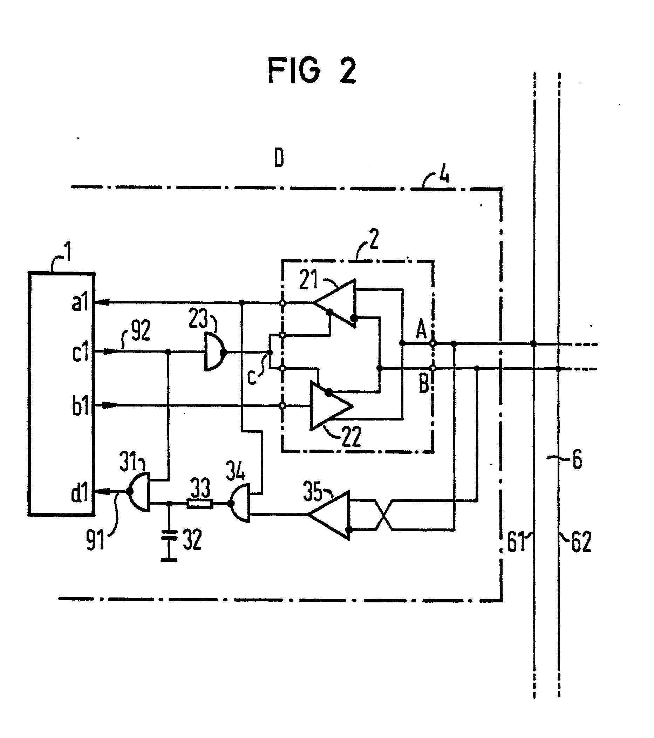

Die in Fig. 2 gezeigte Digitalbaugruppe stimmt mit der Digitalbaugruppe D der Schaltungsanordnung nach Fig. 1 weitgehend überein. Abweichend ist der Datenempfänger 21 zugleich Bestandteil der Erkennungsschaltung, so daß der Datenempfänger 36 nach Fig. 1 entfällt. In gleicher Weise kann auch der Datenempfänger 36a nach Fig. 1 eingespart werden. Wesentlich dabei ist, daß auch der Datenempfänger 21 eine Fail-Safe-Schaltung aufweist.

5

Die Datenempfänger 21 und 35 sind jeweils an ihren Eingängen in Antiparallelschaltung an den Datenbus 6 angeschlossen und mit ihren Ausgängen an die Eingänge des NAND-Gliedes 34 geführt.

Wesentlich ist, daß die beiden Datenempfänger 21 und 35 jeweils ständig empfangsbereit sind. Der Datenempfänger 21 ist daher abweichend von der Schaltungsanordnung nach Fig. 1 mit seinen Steuereingängen nicht an den Inverter 23 angeschlossen. In diesem Fall empfangen die Teilnehmerstellen ständig Daten, d.h. sie hören auch mit, wenn andere Teilnehmerstellen Daten miteinander austauschen.

In entsprechender Weise kann auch bei weiteren Digital- und/oder Übertragungsbaugruppen der zur Datenübertragung dienende Datenempfänger zugleich Bestandteil der Erkennungsschaltung sein.

**Patentansprüche**

1. Schaltungsanordnung zur seriellen Datenübertragung zwischen wenigstens zwei Teilnehmerstellen, mit wenigstens zwei Datensendern (22, 22a), die mit ihren Ausgangsanschlüssen (A, B) an ein und denselben, zwei Adern (61,62) aufweisenden Datenbus (6) angeschlossen sind, jeweils mit einem Steuereingang an eine Steueranordnung (1, 23; 7, 23a) angeschlossen und durch die Steueranordnung derart steuerbar sind, daß immer höchstens einer der Datensender (22, 22a) aktiviert ist, wobei die Datensender im aktivierten Zustand jeweils in Abhängigkeit vom Zustand eines an ihren Eingang angelegten Datensignals eine Spannung erster oder zweiter Polarität an den Datenbus (6) abgeben, und im passiven Zustand am Ausgang einen größeren Innenwiderstand haben als im aktiven Zustand und wobei an den Datenbus (6) wenigstens ein Datenempfänger (21, 21a) angeschlossen ist, der nach Art eines Differenzverstärkers an seinem Ausgang bei vorhandener Eingangsspannung abhängig von deren Polarität einen von zwei vorgegebenen Signalzuständen annimmt,
**dadurch gekennzeichnet,**
daß wenigstens einer der Steueranordnungen eine an den Datenbus angeschlossene Erkennungsschaltung (3, 3a) vorgeschaltet ist, und daß die Erkennungsschaltung (35, 36; 35a 36a) jeweils zwei ständig empfangsbereite Datenempfänger enthält, deren Eingänge in Antiparrallelschaltung an den Datenbus (6) angeschlossen sind und deren Ausgänge an die Eingänge eines Verknüpfungsgliedes geführt sind, und daß als Datenempfänger solche gewählt sind, die bei Normalbetrieb an ihrem Ausgang abhängig von der Polarität der Eingangsspannung einen von zwei vorgegebenen Signalzuständen annehmen und die bei offenem Eingang an ihrem Ausgang in definierter Weise einen der beiden vorgegebenen Signalzustände annehmen, und daß das Verknüpfungsglied derart gewählt ist, daß es bei gleichen Logikpegeln an seinen Eingängen an seinem Ausgang ein Freisignal mit einem ersten logischen Zustand und bei ungleichen Logikpegeln an sienen Eingängen ein Belegtsignal mit einem zweiten logischen Zustand an die Steueranordnung (1, 23; 7, 23a) abgibt.

2. Schaltungsanordnung nach Anspruch 1,
**dadurch gekennzeichnet,**
daß einer der beiden Datenempfänger der Erkennungsschaltung zugleich als Datenempfänger der betreffenden Teilnehmerstelle dient.

3. Schaltungsanordnung nach Anspruch 1 oder 2,
**dadurch gekennzeichnet,**
daß einem Steuereingang der dem zugeordneten Datensender (22, 22a) vorgeschalteten Teilnehmerstelle jeweils ein UND-Glied vorgeschaltet ist, das mit einem ersten Eingang an die Erkennungsschaltung angeschlossen ist und dessen zweiter Eingang zusammen mit dem betreffenden Datensender (22, 22a) durch die Teilnehmerstelle derart steuerbar ist, daß das UND-Glied nur bei passiv gesteuertem Datensender (22, 22a) vorbereitet ist.

4. Schaltungsanordnung nach Anspruch 3,
**dadurch gekennzeichnet,**
daß der Ausgang des Verknüpfungsgliedes (34, 34a) über ein RC-Glied (33, 33a; 32, 32a) an einem Schmitt-Trigger (31, 31a) geführt ist.

5. Schaltungsanordnung nach Anspruch 3 und 4,
**dadurch gekennzeichnet,**
daß der Schmitt-Trigger (31, 31a) als UND-Glied ausgebildet ist.

6. Schaltungsanordnung nach einem der Ansprüche 1 bis 5,
**dadurch gekennzeichnet,**
daß das logische Verknüpfungsglied (34, 34a) ein NAND-Glied ist.

**Claims**

1. Circuit arrangement for serial data transmission between at least two subscriber stations, with at least two data transmitters (22, 22a) which are connected with their output terminals (A, B) to one and the same data bus (6) having two wires (61, 62), in each case connected with a control input to a control arrangement (1, 23; 7, 23a), and being controllable by the control arrangement in such a way that, at most, one of the data transmitters (22, 22a) is activated at any given time, in the activated state the data transmitters outputting a voltage of a first or second polarity to the data bus (6) in each case depending on the state of a data signal applied at their input, and having a higher internal resistance at the output in the passive state than in the active state, and at least one data receiver (21, 21a) being connected to the data bus (6), which receiver assumes, in the manner of a differential amplifier, one of two prescribed signal states at its output given an existing input voltage and depending on its polarity, characterized in that at least one of the control arrangements is preceded by a recognition circuit (3, 3a) connected to the data bus, and in that the recognition circuit (35, 36; 35a 36a) contains in each case two data receivers which are constantly ready to receive and the inputs of which are connected to the data bus (6) in an anti-parallel circuit, and the outputs of which are fed to the inputs of a gating element, and in that selected as data receivers are ones which assume one of two prescribed signal states at their output in normal operation, depending on the polarity of the input voltage, and assume one of the two prescribed signal states at their output in a defined manner given an open input, and in that the gating element is selected in such a way that, given equal logic levels at its inputs, it outputs a free signal with a first logic state at its output, and, given unequal logic levels at its inputs, outputs a busy signal with a second logic state to the control arrangement (1, 23; 7, 23a).

2. Circuit arrangement according to Claim 1, characterized in that one of the two data receivers of the recognition circuit simultaneously serves as data receiver for the respective subscriber station.

3. Circuit arrangement according to Claim 1 or 2, characterized in that an AND gate in each case precedes a control input of the subscriber station preceding the associated data transmitter (22, 22a), the first input of which AND gate is connected to the recognition circuit, and the second input of which, together with the respective data transmitter (22, 22a), can be controlled by the subscriber station in such a way that the AND gate is enabled only given a passively controlled data transmitter (22, 22a).

4. Circuit arrangement according to Claim 3, characterized in that the output of the gating element (34, 34a) is fed via an RC element (33, 33a; 32, 32a) to a Schmitt trigger (31, 31a).

5. Circuit arrangement according to Claim 3 and 4 characterized in that the Schmitt trigger (31, 31a) is designed as an AND gate.

6. Circuit arrangement according to one of Claims 1 to 5, characterized in that the logic gating element (34, 34a) is a NAND gate.

## Revendications

1. Montage pour la transmission sérielle de données entre au moins deux abonnés, avec au moins deux émetteurs de données (22, 22a), qui par leurs bornes de sortie (A, B) sont reliés à un seul et même bus de données qui comporte deux fils (61, 62), et qui sont chacun reliés à l'aide d'une entrée de commande à un dispositif de commande (1, 23; 7, 23a) en étant susceptibles d'être commandés de telle façon qu'au plus l'un des émetteurs (22, 22a) est toujours activé, les émetteurs de données, à l'état activé, émettant chacun en fonction de l'état du signal de données appliqué à son entrée, au bus de données (6) une tension d'une première ou d'une seconde polarité, alors que les émetteurs de données (22, 22a), à l'état passif, présentant à la sortie, une résistance intérieure plus grande qu'à l'état actif, et qu'au bus de données (6) est relié au moins un récepteur de données (21, 21a) qui, à la manière d'un amplificateur différentiel, assume à sa sortie, en présence d'une tension d'entrée et en fonction de sa polarité, un parmi deux états de signaux prédéterminés, caractérisé par le fait qu'en amont de l'un des dispositifs de commande est monté un circuit d'identification (3, 3a) relié au bus de données, et que le circuit d'identification (35, 36; 35a, 36a) comporte respectivement deux récepteurs de données qui sont en permanence prêts à la réception, et dont les entrées sont reliées au bus de données (6) suivant un montage anti-parallèle alors que leurs sorties sont reliées aux entrées d'un circuit logique, et qu'en tant que récepteurs de données on en choisit du genre qui en fonctionnement présentent, en fonction de la polarité de la tension d'entrée, un parmi deux états de signaux prédéterminés, et qui, dans le cas de leur entrée ouverte, présentent à leur sortie et de façon définie, l'un des deux états de signaux prédéterminés, et que le circuit logique est choisi de telle façon que pour un même niveau logique à ses entrées, il émet à sa sortie, pour le dispositif de commande (1, 23; 7, 23a), un signal de libération ou d'autorisation avec un premier état logique, alors que dans le cas de niveaux logiques différents, il émet à ses entrées un signal d'occupation d'un second état logique.

2. Montage selon la revendication 1, caractérisé par le fait que l'un des récepteurs de données du circuit d'identification sert de récepteur de données pour le poste d'abonné concerné.

3. Montage selon la revendication 1 ou 2, caractérisé par le fait qu'en amont d'une entrée de commande du poste d'abonné monté en amont de l'émetteur de données associé, est prévu un circuit ET qui est relié par une première entrée ou circuit d'identification, et dont la seconde entrée est susceptible, simultanément avec l'émetteur de données concerné (23, 22a), d'être commandé par le poste d'abonné de façon que le circuit ET n'est préparé que lorsque l'émetteur de données (22, 22a) est commandé dans son état passif.

4. Montage selon la revendication 3, caractérisé par le fait que la sortie du circuit logique (34, 34a) est relié à une bascule de Schmitt (31, 31a), par l'intermédiaire d'un circuit RC (33, 33a; 32, 32a).

5. Montage selon les revendications 3 et 4, caractérisé par le fait que la bascule de Schmitt (31, 31a) est réalisée sous la forme d'un circuit ET.

6. Montage selon l'une des revendications 1 à 5, caractérisé par le fait que le circuit logique (34, 34a) est un circuit NON-ET.

FIG 1

# FIG 2